Europäisches Patentamt

European Patent Office

Office européen des brevets

(19)

(11) **EP 0 597 059 B1**

(12) **EUROPÄISCHE PATENTSCHRIFT**

(45) Veröffentlichungstag und Bekanntmachung des Hinweises auf die Patenterteilung:
**29.10.1997  Patentblatt 1997/44**

(21) Anmeldenummer: 93909750.7

(22) Anmeldetag: **01.06.1993**

(51) Int Cl.[6]: **G01N 21/51**, G01N 21/53

(86) Internationale Anmeldenummer:
**PCT/CH93/00141**

(87) Internationale Veröffentlichungsnummer:
**WO 93/24824 (09.12.1993 Gazette 1993/29)**

(54) **VORRICHTUNG UND VERFAHREN ZUR MESSUNG VON FESTSTOFFKONZENTRATIONEN IN FLÜSSIGKEITEN**

DEVICE AND PROCESS FOR MEASURING SOLID CONCENTRATIONS IN LIQUIDS

DISPOSITIF ET PROCEDE POUR LA MESURE DE CONCENTRATIONS DE SUBSTANCES SOLIDES DANS DES LIQUIDES

(84) Benannte Vertragsstaaten:
**AT BE CH DE DK ES FR GB IT LI NL PT SE**

(30) Priorität: **02.06.1992  CH 1767/92**

(43) Veröffentlichungstag der Anmeldung:
**18.05.1994   Patentblatt 1994/20**

(73) Patentinhaber: **ZÜLLIG AG
CH-9424 Rheineck (CH)**

(72) Erfinder: **KANNGIESSER, Hartmut
CH-8037 Zürich (CH)**

(74) Vertreter: **Goth, Helmut
GFF, Technopark,
Pfingstweidstrasse 30
8005 Zürich (CH)**

(56) Entgegenhaltungen:
**DE-A- 3 609 156          DE-A- 3 905 101
US-A- 3 867 033          US-A- 5 012 119
US-A- 5 140 168**

- **PATENT ABSTRACTS OF JAPAN vol. 12, no. 280 (P-739)(3127) 2 August 1988 & JP-A-63 061 144 (HITACHI) 17 March 1988**
- **PATENT ABSTRACTS OF JAPAN vol. 6, no. 212 (P-151)(1090) 26 October 1982 & JP-A-57 119 240 (TOKYO SHIBAURA DENKI) 24 July 1982**

**Beschreibung**

Die vorliegende Erfindung betrifft eine Vorrichtung und ein Verfahren zur Messung von Feststoffkonzentrationen in Flüssigkeiten, wobei das auf die Flüssigkeit gerichtete Licht zweier Quellen in einem kombinierten 90°-Streulicht- und einem Rückstreulichtverfahren gleichzeitig gemessen, verarbeitet und daraus die Feststoffkonzentration ermittelt wird.

In der PS-DE 3905101 wird ein Verfahren und eine Vorrichtung zur Messung von Konzentrationen suspendierter Teilchen beschrieben, weiches sich insbesondere für hohe Teilchenkonzentrationen, eignet. Dabei wird in die Suspension eingeleitetes Licht an den Teilchen gestreut und dieses an zwei Stellen verschiedener Entfernung gemessen. Aus einer kombination dieser Messwerte wird die Teilchenkonzentration ermittelt. Dies geschieht unter der Annahme, dass das eingeleitete Licht durch das gleiche Fenster ein- und ausgekoppelt wird, wodurch eine allfällige Verschmutzung des Fensters kompensiert wird. Nachteilig dabei ist die Tatsache, dass diese Annahme nur bedingt richtig ist, und dass sich bei inhomogener Verschmutzung über das Fenster Messfehler ergeben.

Aus DE-A-36 09 156 ist ein Verfahren und eine Vorrichtung zur kontinuierlichen Messung geringer Trübungen in Flüssigkeiten bekannt. Dabei wird durch geeignete Modulation von zwei Lichtquellen unter Verwendung eines einzigen Strahlungsempfängers direkt ein Ausgangssignal für die Trübung gewonnen, indem die eine Lichtquelie für die Trübungsmessung mit einer Frequenz f moduliert wird, während die andere als direktes Vergleichslicht mit einer Frequenz nf moduliert wird. Das demodulierte Signal liefert einerseits direkt den Trübungswert und andererseits einen Vergleichswert der zur Konstantregelung verwendet wird.

In der JP-A-63061144 ist eine Verfahren zum Messen der Konzentration von Bakterien in einer Bakteriensuspension beschrieben. Nach diesem Verfahen wird je ein Lichtstrahl in horizontaler und in vertikaler Richtung durch die Bakteriensuspension geschickt und jeweils das durchgehende und das gestreute Licht gemessen und zusammen ausgewertet, um die Bakterienkonzentration zu bestimmen.

Aus der JP-A-57119240 ist eine Vorrichtung zur Trübungsmessung bekannt, in der zwei Fenster vorgesehen sind, durch welche zwei Lichtstrahlen alternierend in eine wässerige Probe eingestrahlt werden. Das durchgehende und das gestreute Licht eines jeden Lichtstrahls wird dann jeweils einer von zwei hinter der Probe angeordneten Messzellen zugeführt, wobei jede dieser beiden Messzellen infolge der alternierenden Einstrahlung der Lichtstrahlen abwechselnd durchgehendes oder gestreutes Licht empfängt.

Verfahren zur Messung kleiner und kleinster Teilchenkonzentrationen sind in der Wassertechnologie bekannt, wo beispielsweise zur Qualitätsbeurteilung von Trinkwasser die Trübungsmessung herangezogen wird.

Dabei werden vorwiegend Streulichtverfahren eingesetzt. Während bei kleinen Teilchenkonzentrationen i.a. von Trübung gesprochen wird, wird bei hohen Teilchenkonzentrationen vorwiegend vom Feststoffgehalt oder Feststoffkonzentrationen gesprochen. Im Folgenden wird ausschliesslich der Begriff der Feststoffkonzentration (in g/l) verwendet, auch bei extrem kleinen Feststoffkonzentrationen, wo sonst üblicherweise von Trübungswerten gesprochen wird.

Aufgabe der vorliegenden Erfindung ist es, Vorrichtungen und Verfahren anzugeben, mit welchen Feststoffkonzentrationen, insbesondere niedrige wie auch hohe, mit dem gleichen Messverfahren bzw. der gleichen Messanordnung über das 90°-Streulicht und das Rückstreulicht ermittelt werden können.

Erfindungsgemäss wird diese Aufgabe mittels Vorrichtungen und Verfahren gemäss dem Wortlaut nach den Ansprüchen 1 - 12 gelöst. Es zeigen:

Fig. 1 Schematische Darstellung eines 90°-Streulichtverfahrens

Fig. 2 Schematische Darstellung eines Rückstreulichtverfahrens mit zwei Detektoren und mit zwei verschiedenen Lichtwegen

Fig. 3 Schematische Darstellung eines Mehrstrahlverfahrens für eine 90°-Streulichtmessung mit zwei Quellen und zwei Detektoren

Fig. 4 Schematische Darstellung eines erfindungsgemässen Mehrstrahlverfahrens für eine Rückstreulichtmessung mit zwei Quellen und zwei Detektoren

Fig. 5 Schematische Darstellung einer erfindungsgemässen Kombination der Mehrstrahlverfahren für eine 90°-Streulichtmessung und eine 120°-Rückstreulichtmessung mit zwei Quellen und vier Detektoren, von oben gesehen

Fig. 6 Schematische Darstellung der in Figur 5 gezeigten erfindungsgemässen Kombination der Mehrstrahlverfahren für eine 90°-Streulichtmessung und eine 120°-Rückstreulichtmessung mit zwei Quellen und vier Detektoren, von der Seite gesehen

Fig. 7 Schematische Darstellung eines Ausführungsbeispiels mit 2 Quellen und 4 Detektoren von der Seite gesehen

Fig. 8 Prisma zu Fig. 7 in Draufsicht

Fig. 9A Prisma zu Fig. 7 in Ansicht A

Fig. 9B Prisma zu Fig. 7 in Ansicht B

Fig. 10 Schematische Darstellung eines zweiten Ausführungsbeispiels mit einem Reinigungselement und zwei Blenden von der Seite gesehen

Fig. 11 Schematische Darstellung eines dritten Ausführungsbeispiels für die Anordnung von zwei Quellen und zwei Detektoren von oben gesehen

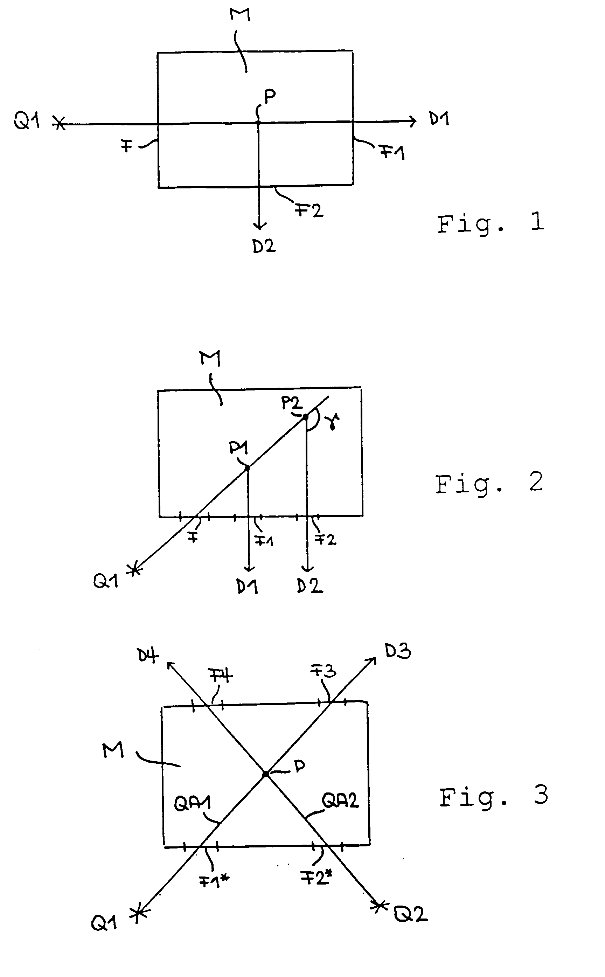

Die Erfindung wird im Weiteren an Hand der Fig. 1 - 11 näher beschrieben.

**Fig. 1** zeigt in schematischer Darstellung eine bekannte Anordnung für ein 90°-Streulichtverfahren.

Die Quelle Q1 sendet Licht durch das Fenster F auf das Messgut M, welches die Partikel P enthält und welches im weiteren von den Fenstern F1 und F2 umgeben ist. Das Licht der Quelle Q1 wird einerseits durch das Messgut abgeschwächt und verlässt dieses durch das Fenster F1, wonach es auf den Detektor D1 fällt, was einer Durchlichtmessung nach der Formel (1.1) entspricht:

$$I_1 / I_{D11} = \exp(c\varepsilon d) / (A_F \, A_{F1}) \qquad (1.1)$$

Es bedeuten

$I_i$ = Lichtintensität der Quelle i
$I_{Dji}$ = Lichtintensität der Quelle i am Detektor j
c = Feststoffkonzentration
$\varepsilon$ = Absorptionskoeffizient
$A_{Fi}$ = Absorptionsfaktor im Fenster $F_i$
d = Lichtweg im Messgut
$d_i$ = i-ter Lichtweg im Messgut

Das Licht der Quelle Q1 wird andererseits am Partikel P gestreut, wobei es das Messgut unter einem Winkel von 90° durch das Fenster F2 verlässt und auf den Detektor D2 fällt, was einer Streulichtmessung nach der Formel (1.2) entspricht:

$$I_1 / I_{D21} = \exp(c\varepsilon d) / (\alpha_{90} \, c \, A_F \, A_{F2}) \qquad (1.2)$$

$\alpha\gamma$ = Streukoeffizient zum Winkel $\gamma$ = 90°

Die Formeln (1.1) und (1.2) gelten unter Vernachlässigung von Mehrfachstreuungen im Messgut.

**Fig. 2** zeigt in schematischer Darstellung eine bekannte Anordnung für ein Rückstreulichtverfahren mit zwei Detektoren. Eine solche Anordnung ist beispielsweise in US-A-3 867 033 beschrieben.

Die Quelle Q1 sendet Licht durch das Fenster F auf das Messgut M, welches die Partikel P1 und P2 enthält und welches vom Fenster F, Fl und F2 umgeben ist. Das Licht wird an den Partikeln P1 und P2 gestreut, wobei das entsprechende Streulicht das Messgut unter einem Winkel $\gamma$ von beispielsweise 120° durch die Fenster F1 und F2 verlässt und auf die entsprechenden Detektoren D1 und D2 fällt, was Streulichtmessungen nach den Formeln (2.1) und (2.2) entspricht:

$$I_1 / I_{D11} = \exp(c\varepsilon d_1) / (\alpha_{120} \, c \, A_F \, A_{F1}) \qquad (2.1)$$

$$I_1 / I_{D21} = \exp(c\varepsilon d_2) / (\alpha_{120} \, c \, A_F \, A_{F2}) \qquad (2.2)$$

Die Formeln (2.1) und (2.2) gelten unter Vernachlässigung von Mehrfachstreuungen im Messgut.

**Fig. 3** zeigt eine schematische Darstellung eines Mehrstrahlverfahrens für eine 90°-Streulichtmessung mit zwei Quellen und zwei Detektoren. Ein solches Verfahren wird beispielsweise in US-A-5,140,168 beschrieben.

Dabei senden die Quellen Q1 und Q2 verschieden moduliertes Licht aus. Dieses wird nach Wechselwirkung mit den im Messgut M enthaltenen Partikeln P mit den Detektoren D3 und D4 detektiert. Die Quellachsen QA1 und QA2 der Quellen Q1 und Q2 stehen senkrecht zueinander. Das Messgut wird von den Fenstern F1*, F2*, F3 und F4 umgeben. Die Detektoren D3 und D4 dienen sowohl zur Detektion des Durchlichtes der jeweils gegenüberliegenden Quelle, als auch zur Detektion des 90°-Streulichtes der senkrecht dazu angeordneten Quelle. Unter vernachlässigung von Mehrfachstreuungen gelten für die Durchlichtmessung die Formeln (3.1) und (3.2) und für die Streulichtmessung die Formeln (3.3) und (3.4) :

$$I_1 / I_{D31} = \exp(c\varepsilon d) / (A_{F1*} \, A_{F3}) \qquad (3.1)$$

$$I_2 / I_{D42} = \exp(c\varepsilon d) / (A_{F2*} \, A_{F4}) \qquad (3.2)$$

$$I_1 / I_{D41} = \exp(c\varepsilon d) / (\alpha_{90} \, c \, A_{F1*} \, A_{F4}) \qquad (3.3)$$

$$I_2 / I_{D32} = \exp(c\varepsilon d) / (\alpha_{90} \, c \, A_{F2*} \, A_{F3}) \qquad (3.4)$$

Dabei sind die Quellen Q1 und Q2 und die Detektoren D3 und D4 so angeordnet, dass die entsprechenden Lichtwege d jeweils gleich gross sind.

Auf diese Weise werden 4 Messwerte erhalten, aus welchen die folgenden Verhältnisse (3.5) und (3.6) gebildet werden.

$$I_{D41} / I_{D31} = \alpha_{90} \, c \, A_{F4} / A_{F3} \qquad (3.5)$$

$$I_{D32} / I_{D42} = \alpha_{90} \, c \, A_{F3} / A_{F4} \qquad (3.6)$$

Die Formeln (3.5) und (3.6) sind von den Quellenintensitäten $I_1$ und $I_2$ und von der Dämpfung $\exp(c\varepsilon d)$ im Messgut unabhängig.

Werden die Quellen Q1 und Q2 so gesteuert, dass die Bedingung (3.7) erfüllt ist, so wird durch Multiplikation von Formel (3.5) mit (3.6) das Ergebnis (3.8) erhalten:

$$I_{D31} = I_{D42} = k \qquad (3.7)$$

$$I_{D32}\, I_{D41} = (\alpha_{90}\, c)^2\, k^2 \qquad (3.8)$$

worin die gemessenen Lichtintensitäten $I_{D32}$ und $I_{D41}$ nur noch vom Streukoeffizienten $\alpha_{90}$, einer Konstante k und der Feststoffkonzentration c abhängig sind.

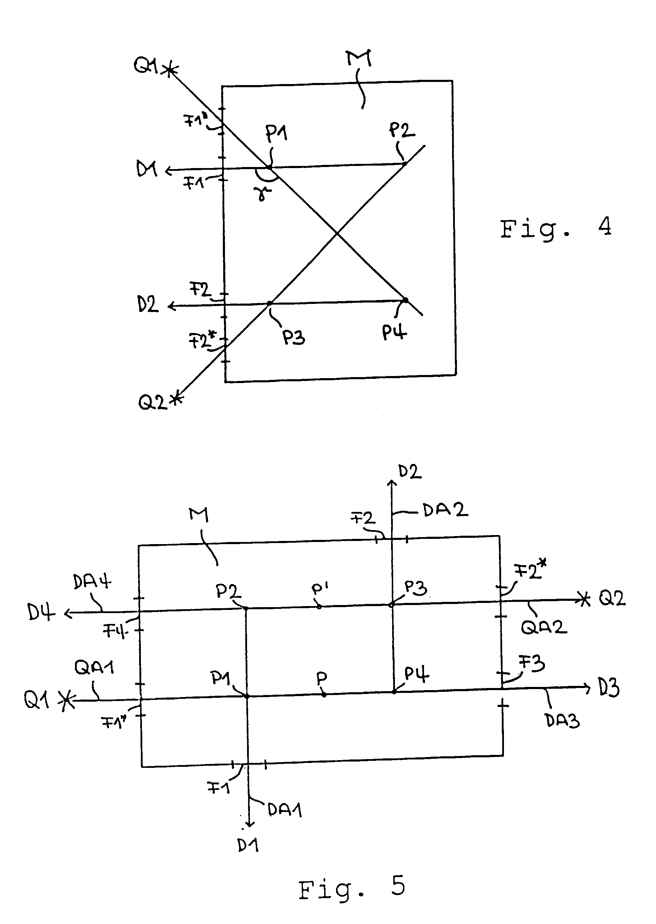

**Fig. 4** zeigt eine schematische Darstellung eines erfindungsgemässen Mehrstrahlverfahrens für eine Rückstreulichtmessung mit zwei Quellen und zwei Detektoren.

Dabei senden die Quellen Q1 und Q2 verschieden moduliertes Licht aus, welches durch die Fenster F1* und F2* in das Messgut M eingekoppelt wird. Dieses wird nach Wechselwirkung mit den im Messgut M enthaltenen Partikeln P1, P2, P3 und P4 mit den Detektoren D1 und D2 detektiert. Das Messgut wird von den Fenstern F1, F1*, F2 und F2* umgeben, welche in der gleichen Fensterfläche liegen, was nicht notwendigerweise erforderlich ist. Die Detektoren D1 und D2 dienen zur Detektion des Rückstreulichtes unter einem Winkel $\gamma$ von 135°. Dabei ergeben sich die folgenden Lichtwege: $d_1$ von F1*-P1-F1, $d_2$ von F2*-P2-F1, $d_3$ von F2*-P3-F2 und $d_4$ von F1*-P4-F2. Insbesondere können die Lichtwege $d_1$ und $d_3$, bzw. $d_2$ und $d_4$ gleich gross sein. Die anschliessenden Formeln enthalten diese Voraussetzung. Unter Vernachlässigung von Mehrfachstreuungen gelten für die Rückstreulichtmessung die Formeln (4.1) und (4.2) für die Quelle Q1 und die Formeln (4.3) und (4.4) für die Quelle Q2:

$$I_1 / I_{D11} = \exp(c\varepsilon d_1) / (\alpha_{135}\, c\, A_{F1*}\, A_{F1}) \quad (4.1)$$

$$I_1 / I_{D21} = \exp(c\varepsilon d_2) / (\alpha_{135}\, c\, A_{F1*}\, A_{F2}) \quad (4.2)$$

$$I_2 / I_{D22} = \exp(c\varepsilon d_1) / (\alpha_{135}\, c\, A_{F2*}\, A_{F2}) \quad (4.3)$$

$$I_2 / I_{D12} = \exp(c\varepsilon d_2) / (\alpha_{135}\, c\, A_{F2*}\, A_{F1}) \quad (4.4)$$

Auf diese Weise werden 4 Messwerte erhalten, aus welchen die folgenden Verhältnisse (4.5) und (4.6) gebildet werden:

$$I_{D11} / I_{D21} = \exp[c\varepsilon(d_2-d_1)]\, A_{F1} / A_{F2} \qquad (4.5)$$

$$I_{D22} / I_{D12} = \exp[c\varepsilon(d_2-d_1)]\, A_{F2} / A_{F1} \qquad (4.6)$$

Die Formeln (4.5) und (4.6) sind von den Quellenintensitäten $I_1$ und $I_2$ und vom Streukoeffizienten $\alpha_{135}$ im Messgut unabhängig.

Werden die Quellen Q1 und Q2 so gesteuert, dass die Bedingung (4.7) erfüllt ist, so wird durch Multiplikation von Formel (4.5) mit (4.6) das Ergebnis (4.8) erhalten:

$$I_{D21} = I_{D12} = k \qquad (4.7)$$

$$I_{D11}\, I_{D22} = k^2 \exp[2c\varepsilon(d_2-d_1)] \qquad (4.8)$$

worin die gemessenen Lichtintensitäten $I_{D11}$ und $I_{D22}$ nur noch von der Differenz der Lichtwege $d_1$ und $d_2$, welche konstant sind, vom Absorptionskoeffizienten $\varepsilon$, von einer Konstante k und von der Feststoffkonzentration c abhängig sind.

Durch geschickte räumliche Anordnung lassen sich die beiden Messverfahren nach Fig. 3 und Fig. 4 miteinander kombinieren, sodass die gleichen Quellen Q1 und Q2 verwendet werden können. Die Elektronik, welche für die Auswertung benötigt wird, ist bei den beiden Messverfahren praktisch identisch.

**Fig. 5** zeigt eine schematische Darstellung einer erfindungsgemässen Kombination der Mehrstrahlverfahren für eine 90°-Streulichtmessung und eine 120°-Rückstreulichtmessung mit zwei Quellen und vier Detektoren, von oben gesehen.

Das Mehrstrahlverfahren für eine 90°-Streulichtmessung besteht in dieser Anordnung aus den Quellen Q1 und Q2 mit den entsprechenden Quellachsen QA1 und QA2, den Partikeln P, bzw. P', den Detektoren D3 und D4 mit den entsprechenden Detektorachsen DA3 und DA4, den Fenstern F1*, F2*, F3 und F4 sowie dem Messgut M.

Das Licht der Quelle Q1 wird auf das Partikel P des Messgutes M geführt. Das Licht der Quelle Q2 wird auf das Partikel P' des Messgutes M geführt.

Die Detektorachse DA3 des Detektors D3 fällt mit der Quellachse QA1 mindestens angenähert, im besonderen exakt zusammen. Der Detektor D3 erfasst das Durchlicht gemäss Formel (5.1); die Detektorachse DA4 des Detektors D4 fällt mit der Quellachse QA2 mindestens angenähert, im besonderen exakt zusammen. Der Detektor D4 erfasst das Durchlicht gemäss Formel (5.2):

$$I_1 / I_{D31} = \exp(c\varepsilon d) / (A_{F1*}\, A_{F3}) \qquad (5.1)$$

$$I_2 / I_{D42} = \exp(c\varepsilon d) / (A_{F2*} A_{F4}) \qquad (5.2)$$

Die Detektorachse DA4 der Detektors D4 steht senkrecht auf der Quellachse QA1. Der Detektor D4 erfasst das Streulicht von Partikel P gemäss Formel (5.3); die Detektorachse DA3 des Detektors D3 steht senkrecht auf der Quellachse QA2. Der Detektor D3 erfasst das Streulicht von Partikel P' gemäss Formel (5.4):

$$I_1 / I_{D41} = \exp(c\varepsilon d) / (\alpha_{90}\, c\, A_{F1*} A_{F4}) \qquad (5.3)$$

$$I_2 / I_{D32} = \exp(c\varepsilon d) / (\alpha_{90}\, c\, A_{F2*} A_{F3}) \qquad (5.4)$$

Die Vertikalebene, in welcher QA1 liegt, ist zur Vertikalebene, in welcher QA2 liegt, parallel angeordnet und fällt mit dieser beinahe zusammen. Insbesondere können die Vertikalebenen zusammenfallen. Der Öffnungswinkel von D3 ist derart, dass er sowohl eine Durchlichtmessung von Q1, als auch eine Streulichtmessung des Partikels P' ermöglicht; der Öffnungswinkel von D4 ist derart, dass er sowohl eine Durchlichtmessung von Q2, als auch eine Streulichtmessung des Partikels P ermöglicht.

Das Mehrstrahlverfahren für eine Rückstreulichtmessung besteht in dieser Anordnung aus den Quellen Q1 und Q2 mit den entsprechenden Quellachsen QA1 und QA2, den Partikeln P1, bzw. P2, P3, bzw. P4, den Detektoren D1 und D2 mit den entsprechenden Detektorachsen DA1 und DA2, den Fenstern F1*, F2*, F1 und F2 sowie dem Messgut M.

Die Detektorachse DA1 des Detektors D1 ist so angeordnet, dass der Detektor D1 das Rückstreulicht des Partikels P1 gemäss Formel (5.5) und das Rückstreulicht des Partikels P2 gemäss Formel (5.6) unter einem Winkel von 120° erfassen kann; die Detektorachse DA2 der Detektor D2 ist so angeordnet, dass der Detektor D2 das Rückstreulicht des Partikels P3 gemäss Formel (5.7) und das Rückstreulicht des Partikels P4 gemäss Formel (5.6) unter einem Winkel von 120° erfassen kann:

$$I_1 / I_{D11} = \exp(c\varepsilon d_1) / (\alpha_{120}\, c\, A_{F1*} A_{F1}) \qquad (5.5)$$

$$I_2 / I_{D12} = \exp(c\varepsilon d_2) / (\alpha_{120}\, c\, A_{F2*} A_{F1}) \qquad (5.6)$$

$$I_2 / I_{D22} = \exp(c\varepsilon d_1) / (\alpha_{120}\, c\, A_{F2*} A_{F2}) \qquad (5.7)$$

$$I_1 / I_{D21} = \exp(c\varepsilon d_2) / (\alpha_{120}\, c\, A_{F1*} A_{F2}) \qquad (5.8)$$

Durch entsprechende Anordnung wird dafür gesorgt, dass einerseits die beiden Lichtwege $d_1$, nämlich F1*-P1-F1 und $d_3$, nämlich F2*-P3-F2 im Messgut M, gleich gross sind und andererseits die beiden Lichtwege $d_2$, nämlich F2*-P2-F1 und $d_4$, nämlich F1*-P4-F2 im Messgut M, gleich gross sind. Dabei ist $d_1$ der kürzere und $d_2$ der längere Lichtweg.

Aus den 4 Messwerten gemäss Formeln (5.1) ... (5.4) werden paarweise die Verhältnisse (5.1) zu (5.3) und (5.2) zu (5.4) gebildet, wobei sich die Formeln (5.9) und (5.10) ergeben:

$$I_{D41} / I_{D31} = \alpha_{90}\, c\, A_{F4} / A_{F3} \qquad (5.9)$$

$$I_{D32} / I_{D42} = \alpha_{90}\, c\, A_{F3} / A_{F4} \qquad (5.10)$$

Die Formeln (5.9) und (5.10) sind wiederum von den Quellenintensitäten $I_1$ und $I_2$ und von der Dämpfung exp $(c\varepsilon d)$ im Messgut unabhängig.

Werden die Quellen Q1 und Q2 so gesteuert, dass die Bedingung (5.11) erfüllt ist, so wird durch Multiplikation von Formel (5.9) mit (5.10) das Ergebnis (5.12) erhalten:

$$I_{D31} = I_{D42} = k \qquad (5.11)$$

$$I_{D41}\, I_{D32} = (\alpha_{90}\, c)^2\, k^2 \qquad (5.12)$$

worin die gemessenen Lichtintensitäten $I_{D41}$ und $I_{D32}$ nur noch vom Streukoeffizienten $\alpha_{90}$, von einer Konstante k und von der Feststoffkonzentration c abhängig sind.

Aus den 4 Messwerten gemäss Formeln (5.5) ... (5.8) werden paarweise die Verhältnisse (5.8) zu (5.5) und (5.6) zu (5.7) gebildet, wobei sich die Formeln (5.13) und (5.14) ergeben:

$$I_{D11} / I_{D21} = \exp[c\varepsilon(d_2-d_1)]\, A_{F1} / A_{F2} \qquad (5.13)$$

$$I_{D22} / I_{D12} = \exp[c\varepsilon(d_2-d_1)]\, A_{F2} / A_{F1} \qquad (5.14)$$

Die Formeln (5.13) und (5.14) sind von den Quellenintensitäten $I_1$ und $I_2$ und vom Streukoeffizienten $\alpha_{120}$ im Messgut unabhängig.

Werden die Quellen Q1 und Q2 so gesteuert, dass die Bedingung (5.15) erfüllt ist, so wird durch Multiplikation von Formel (5.13) mit (5.14) das Ergebnis (5.16) erhalten:

$$I_{D21} = I_{D12} = k \qquad (5.15)$$

$$I_{D11}\,I_{D22} = k^2\,\exp[2c\varepsilon(d_2-d_1)] \qquad (5.16)$$

worin die gemessenen Lichtintensitäten $I_{D11}$ und $I_{D22}$ nur noch von der Differenz der Lichtwege $d_1$ und $d_2$, welche konstant sind, vom Absorptionskoeffizienten $\varepsilon$, von einer Konscante k und von der Feststoffkonzentration c abhängig sind. Die Formeln (5.1) ... (5.16) gelten bei der Vernachlässigung von Mehrfachstreuungen.

Mittels einer elektrischen Ansteuerschaltung werden die Lichtintensitäten $I_1$ und $I_2$ in Leuchtdioden, beispielsweise in GaAs-, GaAlAs-Leuchtdioden oder Laserdioden, erzeugt und in das Messgut M eingekoppelt. Gemessen werden danach die Lichtintensitäten $I_{D11}$, $I_{D12}$, $I_{D21}$, $I_{D22}$, $I_{D31}$, $I_{D32}$, $I_{D41}$ und $I_{D42}$, welche in Siliziumphotodioden, PIN-Dioden, Avalanche-Dioden oder Photomultiplier in elektrische Signale gewandelt werden. Letztere werden einer Signalverarbeitung zugeführt, mittels welcher die Feststoffkonzentrationen im Messgut ermittelt werden.

Die Detektoren D1 - D4 detektieren jeweils Licht beider Quellen Q1 und Q2. Werden die Quellen mit verschieden moduliertem Licht betrieben, so lassen sich die beiden Anteile in den Detektorsignalen in bekannter Weise trennen. Als Modulationsart kommt ein Wechsellichtbetrieb mit Tastverhältnis 50%, ein Pulsbetrieb mit Tastverhältnis sehr viel kleiner als 50%, sowie andere bekannte Modulationsarten in Frage.

Die Wandlercharakteristik der opto-elektrozischen Bauteile sind bekanntlich der Alterung unterworfen und stark temperaturabhängig. Diese Abhängigkeiten sowie die Abhängigkeit von den Verschmutzungen der Fenster F1*, F2*, F1, F2, F3 und F4 werden durch das Mehrstrahiprinzip kompensiert.

Der Abstand der beiden Vertikalebenen, in denen die aufeinander senkrecht stehenden Quellachsen QA1 und QA2 liegen, ist von den Lichtwegen $d_1$ und $d_2$, sowie dem Winkel $\gamma$ der Rückstreulichtmessung abhängig.

Durch die spezielle Anordnung der beiden Quellachsen QA1 und QA2 bezüglich der Detektorachsen DA1 - DA4 ist es möglich, das 90°-Streulicht- und das Rückstreulichtverfahren als Mehrstrahlverfahren mit nur zwei Quellen zu betreiben, was sich besonders vorteilhaft erweist.

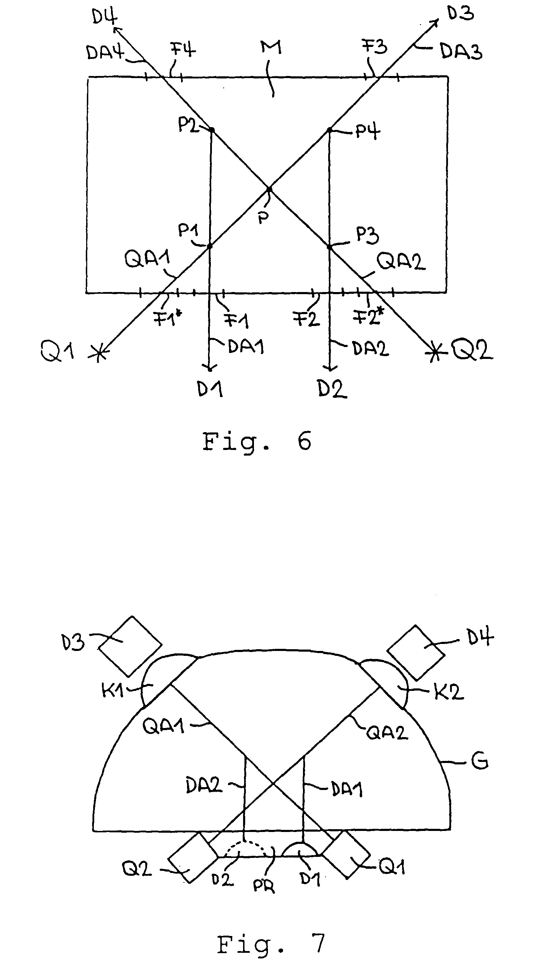

**Fig. 6** zeigt eine schematische Darstellung der in Fig. 5 gezeigten erfindungsgemässen Kombination der Mehrstrahlverfahren für eine 90°-Streulichtmessung und eine Rückstreulichtmessung mit zwei Quellen und vier Detektoren, von der Seite gesehen.

Darin entsprechen die Bezeichnungen Q1, Q2, QA1, QA2, D1 - D4, DA1 - DA4, M, P, P1, P2, P3, P4, F1*, F2*, F1 - F4 denjenigen in Fig. 5. Die Funktionsweise ist in Fig. 5 bereits ausführlich beschrieben worden.

**Fig. 7** zeigt eine schematische Darstellung eines Ausführungsbeispiels mit 2 Quellen und 4 Detektoren von der Seite gesehen.

Am Gehäuse G ist ein Prisma PR angebracht, über welches das Licht der Quellen Q1 und Q2 eingekoppelt wird. Am Gehäuse G sind zwei Kondensorlinsen K1 und K2 angebracht, durch welche das Durchlicht der Quellen Q1 und Q2, sowie das 90°-Streulicht nach Wechselwirkung mit dem Messgut M, welches sich im Gehäuse befindet, den Detektoren D3 und D4 zugeführt wird, welche sich hinter den Kondensorlinsen befinden. Am Prisma sind neben den Quellen Q1 und Q2 im weiteren zwei Detektoren D1 und D2 angebracht, welche der Rückstreulichtmessung dienen.

Das Gehäuse G kann beispielsweise aus schwarzeloxiertem Aluminium gefertigt werden; für die Kondensorlinsen K1 und K2 kommen Materialien wie Saphir, Quarz oder gewöhnliches Glas in Frage. Die Kondensorlinsen werden im Gehäuse eingeklebt.

Als Quellen Q1 und Q2 werden zwei Leuchtdioden vom Typ SFH 414 (Siemens) verwendet, mit welchen im Wechsel kurze Lichtpulse erzeugt werden. Die Repetitionsrate beträgt 1 kHz, bei einem Tastverhältnis von 5%, bei einer Lichtwellenlänge von 950 nm und einem Abstrahlwinkel von +/- 11°. Durch das Prisma PR, welches später genauer beschrieben wird, werden die Strahlen unter einem Winkel von 45° in das Messgut im Inneren des Gehäuses eingekoppelt. Die Quellachsen QA1 und QA2 stehen senkrecht zueinander und die Vertikalebenen, in denen sie liegen, haben einen Abstand von 2,8 mm. Die Quellachsen QA1 und QA2 treffen in einem Abstand von 40 mm auf die jeweils gegenüberliegenden Kondensorlinsen K1 und K2, welche einen Durchmesser von 19 mm aufweisen. In der Nähe des Brennpunktes hinter den Kondensorlinsen sind die Detektoren D3 und D4 angebracht. Mit D3 wird das Durchlicht von Q1 und das 90°-gestreute Licht von Q2 gemessen, mit D4 das Durchlicht von Q2 und das 90°-gestreute Licht von Q1. Als Detektoren D3 und D4 werden Siliziumphotodioden vom Typ SFH 2030 (Siemens) eingesetzt. Die Photoströme dieser Dioden werden in einer elektronischen Schaltung verarbeitet und aus den Messergebnissen wird mittels der Formeln (5.11) und (5.12) unter Berücksichtigung des Streukoeffizienten $\alpha_{90}$ die Feststoffkonzentration c berechnet.

Mit steigender Feststoffkonzentration c wird das Durchlicht zunehmend schwächer und die Genauigkeit der Messung nimmt ab. Oberhalb einer vom Messgut abhängigen Grenze wird mit Vorteil aus dem rückgestreuten Licht die Feststoffkonzentration berechnet.

Durch dasselbe Prisma PR, welches zur Lichteinkopplung verwendet wird, wird das Rückstreulicht an zwei einander gegenüberliegenden Stellen unter einem Winkel von 45° in Richtung der Detektorachsen DA1 und DA2 ausgekoppelt. Die Richtungen beider Auskopplungen stehen in einem Winkel von 120° zu den Quellachsen QA1 und QA2. Unter den Auskoppelstellen befinden sich die Detektoren D1 und D2, Die Lichtwege im Messgut von der Quelle Q1 zum Detektor D1 und von der Quelle Q2 zum Detektor D2 haben eine mittlere Länge von 8 mm; die Lichtwege im Messgut von der Quelle Q2 zum Detektor D1 und von der Quelle Q1 zum Detektor D2 haben eine mittlere Länge von 16 mm. Als Detektoren D1 und D2 werden ebenfalls Siliziumphotodioden vom Typ SFH 2030 eingesetzt.

Die Photoströme dieser Dioden werden in einer elektronischen Schaltung verarbeitet und aus den Messergebnissen wird mittels der Formeln (5.15) und (5.16) unter Berücksichtigung des Absorptionskoeffizienten ε die Feststoffkonzentration c berechnet.

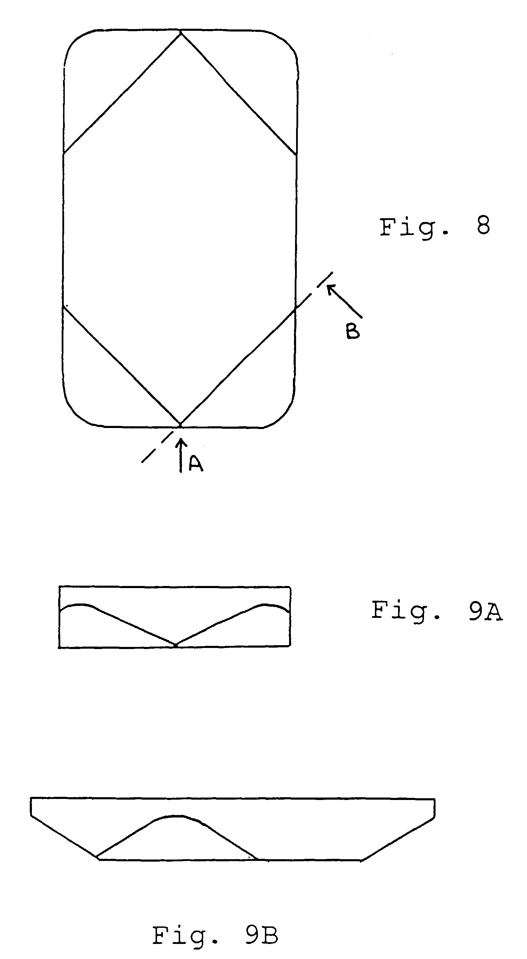

**Fig. 8** zeigt das Prisma zu Fig. 7 in einer Draufsicht. Das Prisma wird vorteilhafterweise aus Saphir mit einem Brechungsindex von 1,76 gefertigt, kann aber auch aus Quarz mit einem Brechungsindex von 1,45 oder aus gewöhnlichem Glas gefertigt werden. Das Prisma wird im Gehäuse eingeklebt.

**Fig. 9A** und **Fig. 9B** zeigen das Prisma zu Fig. 7 in der Ansicht A, bzw. in der Ansicht B.

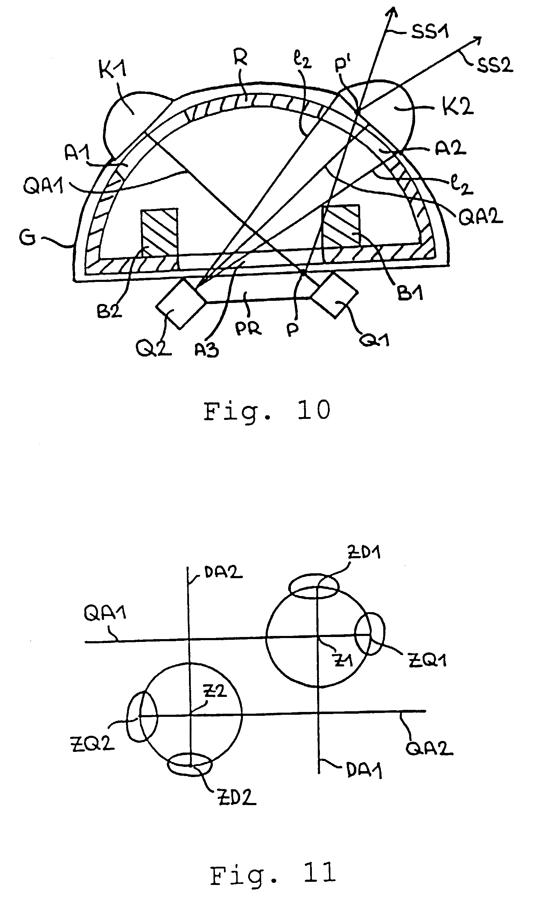

**Fig. 10** zeigt ein zweites Ausführungsbeispiel mit einem Reinigungselement und zwei Blenden von der Seite gesehen.

Durch Verschmutzungen der optischen Komponenten entstehen zwar keine Messfehler, da diese durch das Mehrstrahlverfahren kompensiert werden, die gesamthaft auswertbare Lichtmenge nimmt jedoch ab, wodurch das Auflösevermögen der Messanordnung herabgesetzt wird.

Im Gehäuse G, an welchem die Kondensorlinsen K1 und K2 und das Prisma PR befestigt sind, befindet sich ein Reinigungselement R, in welchem Aussparungen A1, A2 und A3 vorgesehen sind. Diese Aussparungen liegen im Ruhezustand, d.h. wenn das Reinigungselement inaktiv ist, genau über dem Prisma und den Kondensorlinsen. Das Reinigungselement ist verschiebbar angeordnet, und zwar für eine Bewegung senkrecht zu den Quellachsen QA1 und QA2. Es kann beispielsweise mit einem pneumatischen Antrieb versehen werden. Die Bewegung des Reinigungselementes wird so ausgelegt, dass mindestens die gesamte Fläche von Prisma und Kondensorlinsen überstrichen wird. Danach wird das Reinigungselement wieder in den Ruhezustand geführt. Je nach Art und Konzentration des Messgutes ergibt sich in unterschiedlichen Zeitabständen die Notwendigkeit, die Verschmutzungen auf dem Prisma und den Kondensorlinsen durch Aktivierung des Reinigungselementes zu beseitigen. Das Reinigungselement kann beispielsweise aus schwarzeingefärbtem Kunststoff oder hartgummi gefertigt werden. Am Reinigungselement R sind Blenden B1 und B2 angebracht, welche zum Ausblenden von parasitärem Streulicht verwendet werden. Die Quelle Q2 ist mit der Quellachse QA2 und den Begrenzungen $l_2$ des Lichtkegels auf die Kondensorlinse K2 gerichtet. Parasitäres Streulicht kann beispielsweise unter den folgenden Bedingungen entstehen und mittels der Blende B1 unterbunden werden: Das Licht der Quelle Q1, welches mit der Quellachse QA1 auf die Kondensorlinse K1 gerichtet ist, trifft nach Durchlaufen des Prismas auf ein Partikel oder einen Kratzer an der Stelle P auf der Prismaoberfläche und wird dadurch in verschiedene Richtungen, insbesondere aber in Richtung der Kondensorlinse K2 gestreut, was durch einen Streulichtstrahl SS1 angedeutet ist. Befinden sich auf der Kondensorlinse K2 an der Stelle P' ein Partikel oder ein Kratzer, so erfolgt eine weitere Streuung, nach welcher insbesondere ein Streulichtstrahl SS2 auf dem hinter der Kondensorlinse K2 liegenden Detektor einen parasitären Streulichtbeitrag bewirkt. Die Blende B1 ist derart angeordnet, dass sie die Streulichtstrahlen SS1 vor dem Auftreffen auf die Kondensorlinse K2 ausblendet, ohne jedoch den Lichtkegel der Quelle Q2 zu beeinflussen. Die Blende B1 kann auf dem Reinigungselement R angebracht werden oder aber als integrierter Bestandteil des Reinigungselementes R ausgebildet sein.

**Fig. 11** zeigt eine schematische Darstellung eines dritten Ausführungsbeispiels für die Anordnung von zwei Quellen und zwei Detektoren im Gehäuse von oben gesehen.

Mit Zentrum Z1 und Z2 wird senkrecht zur Gehäusefläche eine konische Bohrung angebracht, deren Öffnungswinkel beispielsweise 90 Grad ist. Für die Quellachsen QA1 und QA2 und die Detektorachsen DA1 und DA2 werden Bohrungen mit den Zentren ZQ1, ZQ2, ZD1 und ZD2 vorgesehen, welche unter einem Winkel von beispielsweise 90 Grad zur Konusfläche stehen. Dadurch ergeben sich vier Aussparungen, in welchen die Fenster, beispielsweise aus Saphir, eingeklebt werden, hinter welchen sich die Quellen Q1 und Q2 und die Detektoren D1 und D2 befinden. Diese Anordnung erfüllt die Bedingungen für eine Rückstreulichtmessung.

Mit derartigen erfindungsgemässen Messanordnungen gemäss Fig. 5-11 kann ein breiter Messbereich von Frischwasser mit kleinsten Verunreinigungen, beispielsweise mit einer Auflösung von 0,1 NTU, bis zu Schlamm, beispielsweise mit Feststoffkonzentrationen bis 200 g/l, erfasst werden, wobei eine stufenlose Messung über den gesamten Bereich ermöglicht wird.

Werden ausschliesslich hohe Feststoffkonzentrationen gemessen, so kann auf die Anordnung der Detektoren D3 und D4, und der Kondensorlinsen K1 und K2 verzichtet werden, d.h. die 90°-Streulichtmessung kann entfallen.

Anwendungen für eine derartige Vorrichtung und damit verbundene Verfahren sind die Messung von Feststoffkonzentrationen in der Wassertechnologie, in der Abwassertechnologie, insbesondere in Abwasseraufbereitungssystemen, wo mit sehr hohen Schlammkonzentrationen zu rechnen ist, in der Lebensmitteltechnologie, beispielsweise bei der Herstellung von Fruchtkonzentraten, in der Pharmatechnologie, und auf dem Gebiet der Biotechnologie, insbesondere zur Bestimmung der Biomasse, bei der Bestimmung von Wachstumsraten in Zellkulturen.

Erfindungswesentlich ist, dass Feststoffkonzentrationen, insbesondere tiefe wie auch hohe, mit einem kombinierten Messverfahren, welches einerseits aus einem 90°-Streulichtverfahren und andererseits aus einem Rückstreulichtverfahren besteht, in einer einzigen Messanordnung mit einem Mehrstrahlverfahren ermittelt werden können, wobei nur zwei Quellen verwendet werden, und die entsprechenden Signale mit derselben Elektronik ausgewertet werden. Das Mehrstrahlverfahren, welches auf 2 Messungen durch exakt die gleiche Fensterfläche beruht, erlaubt unerwünschte Verschmutzungen der Fensterflächen und die Alterung der optoelektronischen Bauteile wirkungsvoll zu kompensieren.

**Patentansprüche**

1. Vorrichtung zur Messung von Feststoffkonzentrationen in Flüssigkeiten, bestehend aus einem Gehäuse, zwei Quellachsen (QA1, QA2) und mindestens zwei Detektorachsen (DA1, DA2), wobei die Quellachsen der von den Quellen (Q1, Q2) erzeugten Lichtkegel mindestens annähernd senkrecht zueinander stehen und in mindestens angenähert parallelen Ebenen, insbesondere in derselben Ebene, liegen, dadurch gekennzeichnet, dass eine erste Detektorachse (DA1) derart angeordnet ist, dass sie sich mit einer ersten Quellachse (QA1) in einem ersten Punkt (P1) trifft mit einem ersten Lichtweg $d_1$ im Messgut und dass sie sich mit einer zweiten Quellachse (QA2) in einem zweiten Punkt (P2) trifft mit einem zweiten Lichtweg $d_2$ im Messgut, wobei der zweite Lichtweg $d_2$ grösser als der erste Lichtweg $d_1$ ist und dass eine zweite Detektorachse (DA2) derart angeordnet ist, dass sie sich mit einer zweiten Quellachse (QA2) in einem dritten Punkt (P3) trifft mit einem Lichtweg $d_3$ im Messgut und dass sie sich mit einer ersten Quellachse (QA1) in einem vierten Punkt (P4) trifft mit einem Lichtweg $d_4$ im Messgut, wobei der vierte Lichtweg $d_4$ grösser als der dritte Lichtweg $d_3$ ist.

2. Vorrichtung nach Anspruch 1, dadurch gekennzeichnet, dass eine dritte Detektorachse (DA3) mindestens angenähert in Flucht mit der ersten Quellachse (QA1) und eine vierte Detektorachse (DA4) mindestens angenähert in Flucht mit der zweiten Quellachse (QA2) angeordnet ist.

3. Vorrichtung nach Anspruch 1, dadurch gekennzeichnet, dass aie Quellachsen (QA1, QA2) und die erste sowie die zweite Detektorachse (DA1, DA2) durch Fenster abgedeckt sind, die in konischen Teilflächen des Gehäuses angeordnet sind.

4. Vorrichtung nach Anspruch 1, dadurch gekennzeichnet, dass die Quellachsen (QA1, QA2) und die Detektorachsen (DA1, DA2) beim Eintritt in das Gehäuse durch ein mindestens auf einer Seite planes Prisma abgedeckt sind.

5. Vorrichtung nach Anspruch 1, dadurch gekennzeichnet, dass als Quellen (Q1, Q2) Leuchtdioden, insbesondere GaAs-, GaAlAs-und Laserdioden, und als Detektoren (D1, D2, D3, D4) Silizium-PIN-Dioden, Avalanche-Dioden oder Photomultiplier verwendet werden.

6. Vorrichtung nach Ansprüchen 1 und 2, dadurch gekennzeichnet, dass das Verhältnis des Lichtweges im Messgut der ersten Quelle (Q1) zum dritten Detektor (D3) zum Lichtweg im Messgut der ersten Quelle (Q1) zum ersten Detektor (D1) und das Verhältnis des Lichtweges im Messgut der zweiten Quelle (Q2) zum vierten Detektor (D4) zum Lichtweg im Messgut der zweiten Quelle (Q2) zum Detektor (D2) zwischen 1 und 10, insbesondere 5 beträgt.

7. Vorrichtung nach Anspruch 1, dadurch gekennzeichnet, dass das Verhältnis des Lichtweges im Messgut der ersten Quelle (Q1) zum ersten Detektor (D1) zum Lichtweg im Messgut der ersten Quelle (Q1) zum zweiten Detektor (D2) und das Verhältnis des Lichtweges im Messgut der zweiten Quelle (Q2) zum zweiten Detektor (D2) zum Lichtweg im Messgut der zweiten Quelle (Q2) zum ersten Detektor (D1) kleiner als 1, insbesondere 0,5 ist.

8. Vorrichtung nach Ansprüchen 1 - 7, dadurch gekennzeichnet, dass eine Einrichtung zur Reinigung der Fenster angeordnet ist, bestehend aus einem verschiebbar gelagerten, kolbenförmigen Reinigungselement.

9. Vorrichtung nach Ansprüchen 1 - 8, dadurch gekennzeichnet, dass am Reinigungselement Mittel angeordnet sind, die parasitäres Streulicht ausblenden.

10. Verwendung einer Vorrichtung nach den Ansprüchen 1, 3 - 5 und 7 - 9 zur Messung von Feststoffkonzentrationen in Flüssigkeiten, dadurch gekennzeichnet, dass die Quellen (Q1) und (Q2) verschieden moduliert betrieben werden, dass die Rückstreulichtintensitäten $I_{D11}$ und $I_{D22}$ beim Lichtweg $d_1$ und die Rückstreulichtintensitäten $I_{D12}$ und $I_{D21}$ beim Lichtweg $d_2$ gemessen werden, dass die Verhältnisse $I_{D11} / I_{D21}$ und $I_{D22} / I_{D12}$ gebildet werden, dass die Quellen so gesteuert werden, damit $I_{D21}$ gleich $I_{D12}$ gleich k ist, dass die Rückstreulichtintensitäten $I_{D11}$ und $I_{D22}$ in elektrische Signale gewandelt werden, und dass nach dem mathematischen Zusammenhang (5.16)

$$I_{D11} \, I_{D22} = k^2 \exp[2c\varepsilon(d_2 - d_1)]$$

die Feststoffkonzentration c ermittelt wird, wobei die Grösse $I_{Dji}$ die Lichtintensität der Quelle i am Detektor j, k eine Konstante und ε den Absorptionskoeffizient bezeichnet.

11. Verwendung nach Anspruch 10 einer Vorrichtung nach den Ansprüchen 1 - 9 zur Messung von Feststoffkonzentrationen in Flüssigkeiten, dadurch gekennzeichnet, dass die Durchlichtintensitäten $I_{D31}$ und $I_{D42}$ und die 90°-Streulichtintensitäten $I_{D41}$ und $I_{D32}$ gemessen werden, dass die Verhältnisse $I_{D41}$ / $I_{D31}$ und $I_{D32}$ / $I_{D42}$ gebildet werden, dass die Quellen so gesteuert werden, damit $I_{D31}$ gleich $I_{D42}$ gleich k ist, dass die 90°-Streulichtintensitäten $I_{D41}$ und $I_{D32}$ in elektrische Signale gewandelt werden, und dass nach dem mathematischen Zusammenhang (5.12)

$$I_{D41} \, I_{D32} = (\alpha_{90} \, c)^2 \, k^2$$

die Feststoffkonzentration c ermittelt wird, wobei für hohe Feststoffkonzentrationen vorzugsweise der Zusammenhang (5.16)

$$I_{D11} \, I_{D22} = k^2 \, \exp[2c\varepsilon(d_2 - d_1)]$$

und für tiefe Feststoffkonzentrationen vorzugsweise der Zusammenhang

$$I_{D41} \, I_{D32} = (\alpha_{90} \, c)^2 \, k^2$$

verwendet wird, wobei $\alpha_{90}$ den Streukoeffizient der 90°-Streulichtmessung bezeichnet.

12. Verwendung nach den Ansprüchen 10 oder 11 zur Messung von Feststoffkonzentrationen in der Wassertechnologie, in der Abwassertechnologie, insbesondere in Abwasseraufbereitungssystemen, in der Lebensmitteltechnologie, in der Pharmatechnologie und in der Biotechnologie, insbesondere zur Bestimmung der Biomasse.

**Claims**

1. Device for the measurement of solid concentrations in liquids,

consisting of a housing, two source axes (QA1, QA2) and at least two detector axes (DA1, DA2),
the source axes of the light cones being generated by the sources (Q1, Q2) being situated at least approximately perpendicular to one another and at least approximately in parallel planes, in particular in the same plane,

wherein a first detector axis (DA1) is arranged such that with a first source axis (QA1) it intersects a first source axis (Q1) at a first point (P1) with a first light path $d_1$ in the substance being measured and that it intersects a second source axis (QA2) at a second point (P2) with a second light path $d_2$ in the substance being measured,
the second light path $d_2$ being longer than the first light path $d_1$,
and wherein a second detector axis (DA2) is arranged such that it a second source axis (QA2) at a third point (P3) with a light path $d_3$ in the substance being measured, and that it intersects a first source axis (QA1) at a fourth point (P4) with a light path $d_4$ in the substance being measured, the fourth light path $d_4$ being longer than the third light path $d_3$.

2. Device as claimed in claim 1,
wherein a third detector axis (DA3) is arranged at least approximately in alignment with the first source axis (AQ1) and a fourth detector axis (DA4) at least approximately in alignment with the second source axis (QA2).

3. Device as claimed in claim 1,
wherein the source axes (QA1, QA2) and the first and the second detector axes (DA1, DA2) are covered by windows which are arranged in the conical segments of the housing.

4. Device as claimed in claim 1,
wherein at the entry into the housing the source axes (QA1, QA2) and the detector axes (DA1, DA2) are covered by a prism which is flat at least on one side.

5. Device as claimed in claim 1,
wherein light-emitting diodes, in particular GaAs-, GaAlAs- and laser diodes are used as sources (Q1, Q2) and silicon PIN diodes, avalanche diodes or photomultipliers are used as detectors (D1, D2, D3, D4).

6. Device as claimed in any one of claims 1 and 2,

wherein the ratio of the light path in the substance to be measured from the first source (Q1) to the third detector (D3) to the light path in the substance to be measured from the first source (Q1) to the first detector (D1)
and the ratio of the light path in the substance to be measured from the first source (Q2) to the fourth detector (D4) to the light path in the substance to be measured from the second source (Q2) to the detector (D2) is between 1 and 10, in particular 5.

**7.** Device as claimed in claim 1,

wherein the ratio of the light path in the substance to be measured from the first source (Q1) to the first detector (D1) to the light path in the substance to be measured from the first source (Q1) to the second detector (D2) and the ratio of the light path in the substance to be measured from the second source (Q2) to the second detector (D2) to the light path in the substance to be measured from the second source (Q2) to the first detector (D1) is less than 1, in particular 0.5.

**8.** Device as claimed in any one of claims 1 - 7, characterized in that a mechanism for cleaning the windows is provided, said mechanism consisting of a movably affixed, piston-shaped cleaning element.

**9.** Device as claimed in any one of claims 1 - 8, wherein means are arranged on the cleaning element which blend out parasitic scatter light.

**10.** Use of a device as claimed in any one of claims 1, 3 - 5 and 7 - 9 for the measurement of solid concentrations in liquids

wherein the sources (Q1) and (Q2) are operated with different modulations,
wherein the backscatter light intensities $I_{D11}$ and $I_{D22}$ of light path $d_1$ and $I_{D12}$ and $I_{D21}$ of light path d2 are measured,
wherein the ratios $I_{D11} / I_{D21}$ and $I_{D22} / I_{D12}$ are formed,
wherein the sources are controlled such that $I_{D21} = I_{D12} = k$,
wherein the backscatter intensities $I_{D11}$ and $I_{D22}$ are converted into electrical signals, and wherein the solid concentration c is determined according to the mathematical relation

$$I_{D11} \ I_{D22} = k^2 \exp [2 \ c\varepsilon \ (d_2 - d_1)]$$

where the variable $I_{DJi}$ designates the light intensity of the source i on detector j, k designates a constant and e designates the absorption coefficient.

**11.** Process as claimed in claim 10 of a device as claimed in any one of claims 1 - 9 for the measurement of solid concentrations in liquids,

wherein the transmitted light intensities $I_{D31}$ and $I_{D42}$ and the 90° scattered light intensities $I_{D41}$ and $I_{D32}$ are measured,
wherein the ratios $I_{D41} / I_{D31}$ and $I_{D32} / I_{D42}$ are formed,
wherein the sources are controlled such that $I_{D31} = I_{D42} = k$,
wherein the 90° scattered light intensities $I_{D41}$ and $I_{D32}$ are converted into electrical signals, and wherein the solid concentration c is determined according to the mathematical relation

$$I_{D41} \ I_{D32} = (\alpha_{90} \ c)^2 \ k^2$$

in which case the relation

$$I_{D11} \ I_{D22} = k^2 \exp [2 \ c\varepsilon \ (d_2 - d_1)]$$

is preferably used for high solid concentrations and the relation

$$I_{D41} \ I_{D32} = (\alpha_{90} \ c)^2 \ k^2$$

for low concentrations,
where $\alpha_{90}$ designates the scatter coefficient of the 90° scatter light measurement.

**12.** Process as claimed in any one of claims 10 or 11 for the measurement of solid concentrations in water technology, in waste water technology, in particular in waste water treatment systems, in food technology, in pharmaceuticals technology and in biotechnology, in particular for the purpose of determining the biomass.

**Revendications**

**1.** Dispositif pour la mesure de concentrations de matières solides dans des liquides, composé d'un boîtier, de deux axes sources (QA1, QA2) et d'au moins deux axes détecteurs (DA1, DA2), comportant des axes qui sont les sources des cônes de lumière générées par les sources (Q1, Q2) qui sont au moins approximativement verticaux l'un par rapport à l'autre, et placés sur des plans au moins approximativement parallèles, et en particulier sur le même plan, caractérisé en ce qu'un premier axe détecteur (DA1) est disposé de telle manière qu'il rencontre un premier axe source (QA1) sur un premier point (P1) avec une première voie optique $d_1$ dans le matériau à mesurer, et qu'il rencontre un deuxième axe source (QA2) sur un deuxième point (P2) avec une deuxième voie lumineuse d2 dans le matériau à mesurer, sachant que la deuxième voie lumineuse d2 est plus grande que la première voie lumineuse d1, et qu'un deuxième axe détecteur (DA2) est disposé de telle manière qu'il rencontre un deuxième axe source (QA2) sur un troisième point (P3) avec une première voie optique d3 dans le matériau à mesurer, et qu'il rencontre un premier axe source (QA1) sur un quatrième point (P4) avec un voie lumineuse d4 dans le matériau à mesurer, sachant que la quatrième voie lumineuse d4 est plus grande que la troisième lumineuse d3.

2. Dispositif selon la revendication 1, caractérisé en ce qu'un troisième axe détecteur (DA3) se trouve au moins approximativement dans l'alignement avec le premier axe détecteur (QA1), et qu'un quatrième axe détecteur (DA4) se trouve au moins approximativement dans l'alignement avec le deuxième axe détecteur (QA2).

3. Dispositif selon la revendication 1, caractérisé en ce que les axes sources (QA1, QA2) et le premier et le deuxième axes détecteurs (DA1, DA2) sont recouverts par des fenêtres qui sont placées dans des joints de moulage coniques du boîtier.

4. Dispositif selon la revendication 1, caractérisé en ce que les axes sources (QA1, QA2) et les axes détecteurs (DA1, DA2) sont recouverts d'un prisme qui est plan sur au moins un côté lors de leur pénétration dans le boîtier.

5. Dispositif selon la revendication 1, caractérisé en ce que des diodes électroluminescentes, en particulier des diodes au GaAs, au GaAlAs et laser, sont utilisées comme sources (Q1, Q2), et des diodes PIN au silicium, des diodes à avalanche ou des tubes photomultiplicateurs sont utilisés comme détecteurs (D1, D2, D3, D4).

6. Dispositif selon les revendications 1 et 2, caractérisé en ce que la relation entre le chemin optique dans le matériau à mesurer de la première source (Q1) vers le troisième détecteur (D3), et le chemin optique dans le matériau à mesurer de la première source (Q1) vers le premier détecteur (D1), ainsi que la relation entre le chemin optique dans le matériau à mesurer de la deuxième source (Q2) vers le quatrième détecteur (D4) et le chemin optique dans le matériau à mesurer de la deuxième source (Q2) vers le détecteur (D2) est comprise entre 1 et 10, et atteint en particulier 5.

7. Dispositif selon la revendication 1, caractérisé en ce que la relation entre le chemin optique dans le matériau à mesurer de la première source (Q1) vers le premier détecteur (D1), et le chemin optique dans le matériau à mesurer de la première source (Q1) vers le deuxième détecteur (D2), ainsi que la relation entre le chemin optique dans le matériau à mesurer de la deuxième source (Q2) vers le deuxième détecteur et le chemin optique dans le matériau à mesurer de la deuxième source (Q2) vers le premier détecteur (D1) est inférieure à 1, et atteint en particulier 0,5.

8. Dispositif selon les revendications 1 à 7, caractérisé en ce qu'un dispositif est prévu pour le nettoyage des fenêtres, et qu'il est composé d'un élément de nettoyage en forme de piston et logé de manière mobile.

9. Dispositif selon les revendications 1 à 8, caractérisé en ce que des dispositifs qui suppriment la lumière diffuse parasitaire sont installés sur l'élément de nettoyage.

10. Utilisation d'un dispositif selon les revendications 1, 3 à 5, et 7 à 9, pour la mesure de concentrations de matières solides dans des liquides, caractérisée en ce que les sources (Q1) et (Q2) sont exploitées d'une manière modulée et variable, si bien que les intensités de la lumière de rétrodiffusion $I_{d11}$ et $I_{d22}$ et les intensités de la lumière de rétrodiffusion $I_{d12}$ et $I_{d21}$ sont mesurées sur le chemin optique $d_2$, que les relations $I_{D11}/I_{D21}$ et $I_{D22}/I_{D12}$ sont créées, que les sources sont manoeuvrées de telle manière que $I_{D21}$ est égal à $I_{D12}$ et égal à k, que les intensités de la lumière de rétrodiffusion $I_{D11}$ et $I_{D22}$ sont transformées en signaux électriques, et que la concentration c des matières solides est déterminée en vertu de l'équation mathématique suivante (5.16)

$$I_{D11}\ I_{D22} = k^2\ \exp[2c\varepsilon\ (d_2-d_1)]$$

dans laquelle la grandeur $I_{D11}$ désigne l'intensité lumineuse de la source i sur le détecteur j, k une constante et ε un coefficient d'absorption.

11. Utilisation selon la revendication 10 d'un dispositif selon les revendications 1 à 9 pour la mesure de concentrations de matières solides dans des liquides, caractérisée en ce que les intensités de la lumière transmise $I_{D31}$ et $I_{D42}$ et les intensités de la lumière diffuse à 90 degrés $I_{D41}$ et $I_{D32}$ sont mesurées, que les relations $I_{D41}/I_{D31}$ et $I_{D32}/I_{D42}$ sont créées, que les sources sont manoeuvrées de telle manière que $I_{D41}$ est égal à $I_{D42}$ et égal à k, que les intensités de la lumière diffuse à 90 degrés $I_{D41}$ et $I_{D42}$ sont transformées en signaux électriques, et que la concentration c des matières solides est déterminée en vertu de l'équation mathématique suivante (5.12)

$$I_{D41}\ I_{D32} = (\alpha_{90}\ c)^2\ k^2$$

sachant que pour les concentrations élevées de matières solides, on applique de préférence l'équation (5.16)

$$I_{D11} \, I_{D22} = k^2 \exp[2c\varepsilon \, (d_2 - d_1)]$$

et pour les faibles concentrations de matières solides, on applique l'équation (5.12),

$$I_{D41} \, I_{D32} = (\alpha_{90} \, c)^2 \, k^2$$

où $\alpha_{90}$ désigne le coefficient de diffusion de la mesure de la lumière diffuse à 90 degrés.

12. Utilisation d'un dispositif selon les revendications 10 ou 11 pour la mesure de concentrations de matières solides dans la technique de l'eau, la technique des eaux usées, et en particulier dans les systèmes de traitement des eaux usées, dans la technique des produits alimentaires, dans la pharmacotechnologie et en biotechnologie, et en particulier pour la détermination de la biomasse.

Fig. 1

Fig. 2

Fig. 3

Fig. 4

Fig. 5

Fig. 6

Fig. 7

Fig. 8

Fig. 9A

Fig. 9B

Fig. 10

Fig. 11